# EUROPEAN PATENT APPLICATION

(11) **EP 0 552 399 A1**
(43) Date of publication of application: **28.07.1993**
(21) Application number: 92107928.1
(22) Date of filing: 12.05.1992
(51) Int. Cl.: B60S 1/52

(54) **Windshield wiper**

(30) Priority: 22.01.1992 US 823969
(71) Applicant: Liou, Ming-Chong, Miaoli Hsien (TW)
(72) Inventor: Liou, Ming-Chong, Miaoli Hsien (TW)
(74) Representative: Dickel, Klaus, Dipl.-Ing.

(57) **Abstract**

A windshield wiper includes a hollow rod (1) which connects its inner end with the sprayer of the car, a hollow holder (2) which connects with the rod (1) and is provided with several holes (21) on two sides, and a wiper (3) which contains a base (31) jointed with the holder (2). When the wiper is moved in accordance with the rod (1), if the sprayer is turned on, water can be sprayed from the moving holder (2) on every part of the windshield, so that the whole area of the windshield is cleaned by the wiper.

## Description

### BACKGROUND OF THE INVENTION

In prior art systems, a car is provided with a pair of wipers in front of the windshield. A spraying system is provided near the bottom of the windshield. As the spraying system sprays water on the windshield, the wipers move reciprocatedly to clean the windshield. It is known that the spraying system sprays water on the same areas of the windshield which is mostly the center part of the windshield. The edges of the windshield are usually uncleaned because there is not enough water for a thorough cleaning.

### SUMMARY OF THE INVENTION

It is the purpose of this invention, therefore, to mitigate and/or obviate the above-mentioned drawbacks in the manner that water is sprayed on the whole area of the windshield for a thorough cleaning.

A primary objective of the present invention is to a new windshiled wiper which includes a special spraying system on the holder of the wiper.

Another objective of the present invention is to provide a windshield wiper which can spray water from holes on the holder of the wiper to provide enough water to clean the whole area of the windshield including the edges thereof.

Further objectives and advantages of the present invention will become apparent from the following detailed description when considered in connection with the accompanying dawings.

### BRIEF DESCRIPTION OF THE DRAWINGS

- FIG. 1: is a cross-sectional view of a preferred windshield wiper in accordance with the present invention;
- FIG. 2: is a perspective view of a preferred windshield wiper in accordance with the present invention; and
- FIG. 3: is a plan view of the present invention in an exemplary embodiment.

### DETAILED DESCRIPTION OF THE PREFERRED EMBODIMENT

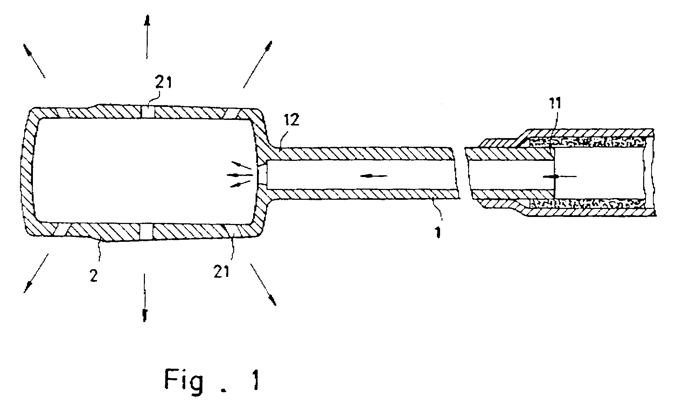

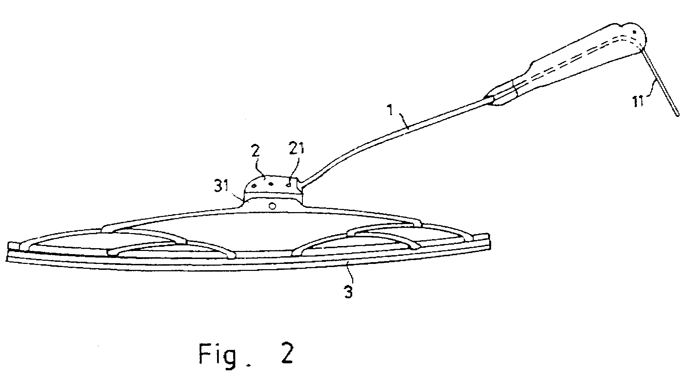

Referring to figures 1 and 2, a preferred embodiment of the present invention is a windshield wiper which includes a hollow connecting rod 1, the hollow interior of which is in fluid connection through a passage way 11 with a fluid reservoir and a pump of the sprayer of the car, a holder 2 which is connected to the outer end of the hollow rod 1 and is provided with several holes on two sides, and a wiper 3 which is connected to a base 31 attached to holder 2. When the sprayer of the car is turned on, water will pass through the hollow passages of the rod 1 and the holder 2 and then sprays out from the holes 21 on the holder 2.

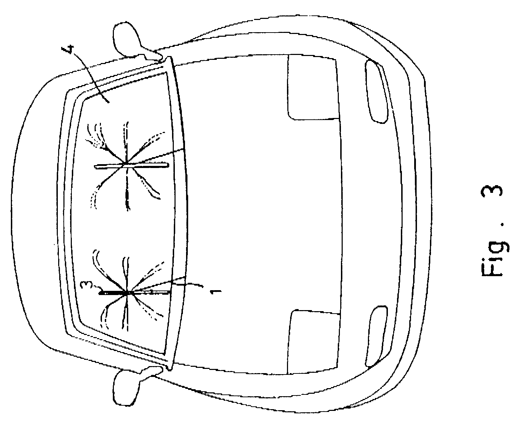

In use, referring to figure 3, since the wiper 3 is connected with the rod 1, it will be moved in accordance with the rod 1. The holder 2 is moved at the same time, so that the water can be sprayed on every part of the windshield 4 during the movement of the system.

It is to be understood that the windshield wiper of the present invention has obviously provided an improved structure which can spray water on the whole area of the windshield and is useful for cleaning by the wiper.

Although this invention has been described in connection with specific forms and embodiments thereof, it is to be understood that all matter herein described or shown in the accompanying drawings is to be interpreted as illustrative and not in a limiting sense. Thus, it will be appreciated that the drawings are exemplary of a preferred embodiment of the invention. Various modifications may be made without departing from the scope of the appended claims.

## Claims

1. A windshield wiper including:
a hollow rod (1) the inner end of which being connected to the sprayer of the car,
a hollow holder (2) which is connected to said hollow rod (1) and is provided with at least one hole (21), and
a wiper (3) comprising a base (31) which is connected to said holder (2).

2. A windshield wiper as claimed in claim 1, wherein holes (21) are provided on two sides of the hollow holder (2).

3. A windshield wiper as claimed in claim 1, wherein a passage way (11) connects the hollow interior of said hollow rod (1) with the sprayer of the car.
